# EUROPEAN PATENT APPLICATION

(11) **EP 4 773 242 A1**
(43) Date of publication of application: **08.07.2026**
(21) Application number: 23953925.7
(22) Date of filing: 31.10.2023
(51) Int. Cl.: H01M 4/58, H01M 4/136, H01M 4/1397, H01M 10/0525, C01B 25/45

(54) **LITHIUM MANGANESE IRON PHOSPHATE MATERIAL AND PREPARATION METHOD THEREFOR, POSITIVE ELECTRODE SHEET AND PREPARATION METHOD THEREFOR, AND BATTERY**

(30) Priority: 27.09.2023 CN 202311265390
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: HU, Qi, Huizhou, Guangdong 516039 (CN); XU, Xinxin, Huizhou, Guangdong 516039 (CN); LI, Si, Huizhou, Guangdong 516039 (CN); WANG, Chao, Huizhou, Guangdong 516039 (CN); ZENG, Hanmin, Huizhou, Guangdong 516039 (CN); HE, Wei, Huizhou, Guangdong 516039 (CN)
(74) Representative: Zhu, Puxing
(86) International application number: PCT/CN2023/128716
(87) International publication number: WO 2025/065790

(57) **Abstract**

A lithium manganese iron phosphate material and a preparation method thereof, a positive electrode sheet and a preparation method thereof, and a battery are provided. The lithium manganese iron phosphate material is LiFeₓMn_{y}A_{(1-x-y)}PO₄, where 0 < x < 1 , **0** < y < 1, 0 ≤ 1 - x-y ≤ 0.2, and the doping element A is selected from at least one of Be, Ca, Mg, Ba and Sr; the lithium manganese iron phosphate material has the surface basicity value of 10~150 µmol/g.

## Description

This disclosure claims a priority of Chinese patent application No. 202311265390.0 filed with China National Intellectual Property Administration on September 27, 2023, the entire disclosure of which is incorporated herein by reference.

### TECHNICAL FIELD

The present disclosure relates to the field of lithium-ion battery, and in particular, to a lithium manganese iron phosphate material, a preparation method thereof, a positive electrode sheet and a preparation method thereof, and a battery.

### BACKGROUND

At present, a lithium-ion battery used in the field of a new energy vehicle mainly include a lithium iron phosphate battery, a ternary battery, and a lithium manganese iron phosphate battery. Among them, the lithium manganese iron phosphate battery refers to a lithium-ion battery using lithium manganese iron phosphate (LMFP) as a positive electrode material. As an upgraded version of lithium iron phosphate, lithium manganese iron phosphate is a novel positive electrode material obtained by adding a manganese element on a basis of lithium iron phosphate. Compared with lithium iron phosphate, lithium manganese iron phosphate has a higher voltage platform, and an energy density which may be 20% higher than that of lithium iron phosphate, while retaining a safety and low-cost characteristics of a lithium iron phosphate cell.

### SUMMARY

However, the lithium manganese iron phosphate material in the related art suffer from poor processability. That is, when mixing the lithium manganese iron phosphate material with a binder, a solvent and other components to prepare a positive electrode slurry, the impurity in the lithium manganese iron phosphate material reacts with the binder, resulting in an increase in the viscosity of the binder, which makes it difficult for the binder to disperse uniformly in the solvent. Therefore, addition of a large amount of solvent is needed to effectively disperse the binder, resulting in a low solid content of the positive electrode slurry, which further leads to the poor electrical performance of the positive electrode sheet prepared from the positive electrode slurry, and thus the poor cycle performance of the lithium-ion battery.

In a first aspect, an embodiment of the present disclosure provides a lithium manganese iron phosphate material having a structural formula of *LiFeₓMn_{y}A*_{(*1-x-y*)}*PO₄,* where 0 *< x <* 1, 0 < *y* < 1, 0 ≤ 1 *- x - y* ≤ 0.2, and the doping element A is selected from at least one of Be, Ca, Mg, Ba and Sr. The lithium manganese iron phosphate material has a surface alkalinity value of 10 µmol/g ~ 150 µmol/g.

In a second aspect, an embodiment of the present disclosure provides a preparation method of a lithium manganese iron phosphate material, comprising:
mixing a first raw material including a manganese source, an iron source, a complexing agent, a reducing agent and an alkaline solution to obtain a first reaction system, controlling the pH of the first reaction system to be 9.0~11.0, and reacting each of the components in the first reaction system to obtain a precursor *FeₓMn*_{(1-*x*)}(*OH*)*₂,* where 0 < *x* < 1;
mixing a second raw material including the precursor *FeₓMn*_{(1-*x*)}(*OH*)₂*,* a lithium source, a phosphorus source, a dopant and a carbon source to obtain a second reaction system, controlling the pH of the second reaction system to be 8.0~9.5, performing spray granulation on the second reaction system to obtain a sintering precursor, and performing a sintering treatment of the sintering precursor to obtain the lithium manganese iron phosphate material. The lithium manganese iron phosphate material has a structural formula of LiFeₓMn_{y}A_{(1-x-y)}PO₄,where 0 < *x <* 1, 0 < *y* < 1, 0 ≤ 1 *- x - y* ≤ 0.2, and the doping element A is selected from at least one of Be, Ca, Mg, Ba and Sr.

In a third aspect, an embodiment of the present disclosure provides a positive electrode sheet, comprising a positive electrode current collector and a positive electrode active material layer disposed on the positive electrode current collector. The positive electrode active material layer comprises the lithium manganese iron phosphate material as described above or the lithium manganese iron phosphate material prepared by the preparation method for the lithium manganese iron phosphate material as described above.

In a fourth aspect, an embodiment of the present disclosure provides a preparation method of a positive electrode sheet, comprising:
providing a solid raw material and a solvent, and uniformly mixing the solid raw material and the solvent to obtain a positive electrode slurry, where the solid raw material comprises a lithium manganese iron phosphate material, a binder and a conductive agent, and the lithium manganese iron phosphate material is the lithium manganese iron phosphate material as described above or the lithium manganese iron phosphate material prepared by the preparation method of the lithium manganese iron phosphate material as described above;
providing a positive electrode current collector, applying the positive electrode slurry onto the positive electrode current collector, and performing a dry treatment of the positive electrode slurry to form a positive electrode active material layer, thereby obtaining the positive electrode sheet.

In a fifth aspect, an embodiment of the present disclosure provides a battery, comprising a positive electrode sheet, a negative electrode sheet, a separator and an electrolyte. The positive electrode sheet is the positive electrode sheet as described above or the positive electrode sheet prepared by the preparation method of the positive electrode sheet as described above. Advantageous Effect

The beneficial effects of the present disclosure are as follows: in the lithium manganese iron phosphate material provided in the embodiment of the present disclosure, the lithium manganese iron phosphate material has the surface alkalinity value of 10 µmol/g~150 µmol/g. The surface alkalinity test can avoid large test errors caused by the alkalinity of the material itself and the alkalinity of the distilled water itself in the conventional wet test. Therefore, the surface alkalinity value more truly reflects the surface alkalinity caused by excess residual lithium on the material surface in a dry state, and more directly reflects the influence on the slurry property during subsequent processing of the material. The surface alkalinity value of the lithium manganese iron phosphate material is within a reasonable range, which means that the content of excess lithium in the lithium manganese iron phosphate material is low, and also means that the contents of lithium carbonate impurity and lithium hydroxide impurity are also low. Thus, when the lithium manganese iron phosphate material is used to prepare the positive electrode slurry, the problem that the viscosity of the binder increases such that the binder is difficult to be dispersed due to the reaction between the lithium carbonate impurity and the lithium hydroxide impurity with the binder can be avoided or alleviated. Furthermore, the lithium manganese iron phosphate material and the binder can be dispersed while reducing the addition amount of the solvent, thereby increasing the solid content of the positive electrode slurry. After the positive electrode slurry is coated on the current collector and rolled, the compaction density of the positive electrode slurry layer on the current collector surface can be enhanced, such that it is possible to improve the electrical performance of the positive electrode sheet and in turn improve the cycle performance of the lithium-ion battery.

### BFRIF DESCRIPTION OF THE DRAWINGS

FIG. 1 is a flow diagram of a preparation method of a lithium manganese iron phosphate material provided in an embodiment of the present disclosure.

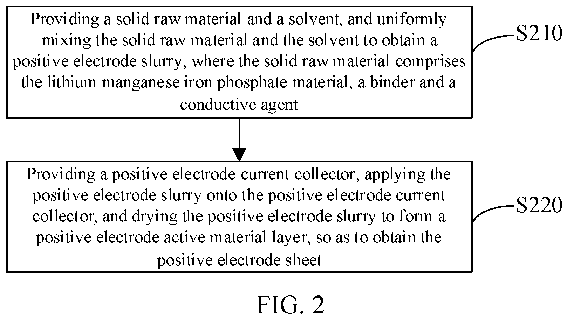

FIG. 2 is a flow diagram of a preparation method of a positive electrode sheet provided in an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, rather than all of the embodiments. Based on the embodiments in the present disclosure, all other embodiments obtained by those skilled in the art without creative efforts shall fall within a protection scope of the present disclosure.

It should be noted that, in order to solve the problem of poor processability of the lithium manganese iron phosphate material in the related art, the inventors of the present disclosure have conducted a large number of experimental studies and finally found that: the reason for the poor processability of the lithium manganese iron phosphate material in the related art is that the surface alkalinity value of the lithium manganese iron phosphate material in the related art is high, which means that the content of excess lithium in the lithium manganese iron phosphate material is high, and also means the contents of the lithium carbonate impurity and the lithium hydroxide impurity are also high. Since lithium carbonate and lithium hydroxide destroy the molecular structure of the binder and cause the polymer chains in the binder molecules to break, it causes increase in the viscosity of the binder, making it difficult for the binder to disperse uniformly in the solvent. Therefore, a large amount of solvent must be added to effectively disperse the binder, resulting in a low solid content of the positive electrode slurry, which further leads to poor electrical performance of the positive electrode sheet prepared from the positive electrode slurry, and thus results in poor cycle performance of the lithium-ion battery.

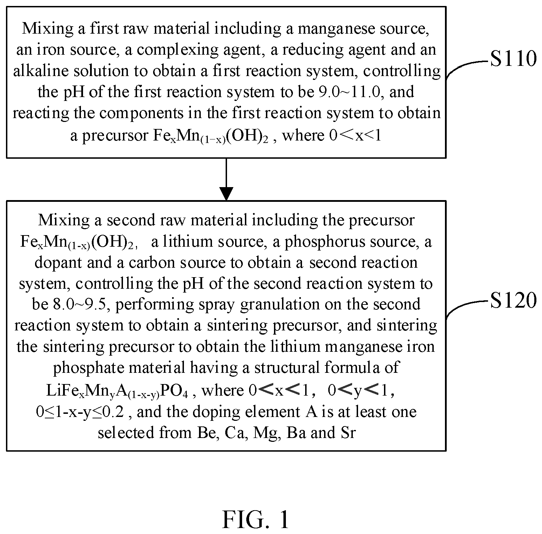

Please refer to FIG. 1. An embodiment of the present disclosure provides a lithium manganese iron phosphate material having a structural formula of LiFeₓMn_{y}A_{(1-x-y)}PO₄, where 0 < *x* < 1, 0 < *y* < 1, 0 ≤ 1 *- x* - *y* ≤ 0.2, and the doping element A is selected from at least one of Be (beryllium), Ca (calcium), Mg (magnesium), Ba (barium) and Sr (strontium). The lithium manganese iron phosphate material has the surface alkalinity value of 10 µmol/g~150 µmol/g.

Exemplarily, x may be 0.1, 0.2, 0.3, 0.4, 0.5, 0.6, 0.7, 0.8, etc.; y may be 0.1, 0.2, 0.3, 0.4, 0.5, 0.6, 0.7, 0.8, etc.; 1-x-y may be 0, 0.01, 0.02, 0.03, 0.05, 0.08, 0.1, 0.12, 0.15, 0.18, 0.2, etc.

Exemplarily, the lithium manganese iron phosphate material may have the surface alkalinity value of 10 µmol/g, 15 µmol/g, 30 µmol/g, 50 µmol/g, 70 µmol/g, 90 µmol/g, 110 µmol/g, 120 µmol/g, 150 µmol/g, etc. Preferably, the lithium manganese iron phosphate material has the surface alkalinity value of 15 µmol/g~110 µmol/g.

Exemplarily, the lithium manganese iron phosphate material has the particle size D50 of 0.1 µm~0.6 µm, such as 0.1 µm, 0.2 µm, 0.3 µm, 0.4 µm, 0.5 µm, 0.6 µm, etc.

Exemplarily, the lithium manganese iron phosphate material has the carbon element content of 1.0 wt%~2.5 wt%, such as 1.0 wt%, 1.2 wt%, 1.5 wt%, 1.8 wt%, 2.0 wt%, 2.3 wt%, 2.5 wt%, etc.

Exemplarily, the lithium manganese iron phosphate material has the moisture content of 50 ppm~300 ppm, such as 50 ppm, 80 ppm, 100 ppm, 150 ppm, 180 ppm, 200 ppm, 250 ppm, 280 ppm, 300 ppm, etc.

Exemplarily, the primary particles of the lithium manganese iron phosphate material have particle size D50 of 0.1 µm~0.6 µm, such as 0.1 µm, 0.2 µm, 0.3 µm, 0.4 µm, 0.5 µm, 0.6 µm, etc.

Exemplarily, the lithium manganese iron phosphate material may have a single-crystal structure or a single-crystal-like structure.

In the lithium manganese iron phosphate material provided in the embodiment of the present disclosure, the surface alkalinity value of the lithium manganese iron phosphate material is 10 µmol/g~150 µmol/g, and the surface alkalinity value of the lithium manganese iron phosphate material is relatively low, which means that the contents of lithium carbonate impurity and lithium hydroxide impurity in the lithium manganese iron phosphate material are low. Thus, when the lithium manganese iron phosphate material is used to prepare a positive electrode slurry, the problem that the viscosity of the binder increases and thus it is difficult for the binder to disperse due to the reaction between the lithium carbonate impurity and the lithium hydroxide impurity with the binder can be avoided or alleviated. Furthermore, the lithium manganese iron phosphate material and the binder can be dispersed while reducing the addition amount of solvent, such that it is possible to increase the solid content of the positive electrode slurry. After the positive electrode slurry is coated on the current collector and rolled, the compaction density of the positive electrode slurry layer on the current collector surface can be enhanced, thereby improving the electrical performance of the positive electrode sheet and further improving the cycle performance of the lithium-ion battery.

It should be noted that when the lithium manganese iron phosphate material in the related art is used to prepare a positive electrode slurry, due to the high surface alkalinity value and poor processability of the lithium manganese iron phosphate material, more solvent is required to disperse the lithium manganese iron phosphate material and the binder, and the solid content of the obtained positive electrode slurry is usually 40%~55%. However, the lithium manganese iron phosphate material of the present disclosure has a low surface alkalinity value and good processability. Thus, when the lithium manganese iron phosphate material is used to prepare a positive electrode slurry, the solid content of the obtained positive electrode slurry can reach 60%~70%. That is to say, the lithium manganese iron phosphate material of the embodiment of the present disclosure is beneficial to improving the solid content of the positive electrode slurry. After the positive electrode slurry is coated on the current collector and rolled, the compaction density of the positive electrode slurry layer on the current collector surface can be enhanced, thereby improving the electrical performance of the positive electrode sheet and further improving the cycle performance of the lithium-ion battery.

Please refer to FIG.1. An embodiment of the present disclosure further provides a preparation method of a lithium manganese iron phosphate material, which is used to prepare the lithium manganese iron phosphate material in any one of the above embodiments. The preparation method of the lithium manganese iron phosphate material includes:
S110-Mixing a first raw material including a manganese source, an iron source, a complexing agent, a reducing agent and an alkaline solution to obtain a first reaction system, controlling the pH of the first reaction system to be 9.0~11.0, and reacting each of the components in the first reaction system to obtain a precursor *FeₓMn*₍₁₋ₓ₎(*OH*)*₂,* where 0 < *x* < 1.

It is to be noted that by controlling the pH of the first reaction system to be 9.0~11.0, i.e., the first reaction system is kept at a relatively high alkalinity, which may render Mn and Fe ions sufficiently precipitated to form the precursor *FeₓMn*₍₁₋ₓ₎(*OH*)*₂.*

It may be understood that the pH of the first reaction system may be controlled by adjusting the addition amount of the alkaline solution. Exemplarily, the pH of the first reaction system may be controlled to be 9.0, 9.2, 9.5, 9.8, 10.0, 10.2, 10.5, 10.8, 11.0, etc.

Exemplarily, the alkaline solution includes water and an alkaline substance. The alkaline substance includes at least one of sodium hydroxide and potassium hydroxide, and the alkaline substance in the alkaline solution has a concentration of 0.1 mol/L~4 mol/L, such as 0.1 mol/L, 0.2 mol/L, 0.3 mol/L, 1 mol/L, 2 mol/L, 3 mol/L, 4 mol/L, etc.

Exemplarily, the manganese source includes at least one of manganese sulfate, manganese phosphate, manganese oxalate, dimanganese trioxide, tritrimanganese tetraoxide, manganese acetate, manganese carbonate, manganese hydroxide, manganese chloride, manganese sulfate containing crystal water, methylcyclopentadienyltricarbonyl manganese, manganese pyrophosphate, manganese trichloride, manganese metasilicate, dimanganese decacarbonyl, manganese titanate, manganese carbide, manganese nitrate, manganese monoxide, didimanganese heptaoxide and manganese dioxide. Preferably, the manganese source includes at least one of divalent manganese sources such as manganese sulfate containing crystal water, manganese nitrate, manganese oxalate and manganese carbonate, because the divalent manganese source has a low cost, is conducive to industrial production, and at the same tiime is conducive to preparing the precursor *FeₓMn*_{(1*-x*)}(*OH*)*₂* with stable valence.

Exemplarily, the iron source includes at least one of ferrous sulfate, manganese sulfate containing crystal water, ferrous oxide, ferrous chloride, ferrous iodide, ferrous bromide, ferrous sulfide, ferrous hydroxide, ferrous oxalate, ferrous lactate, ferrous gluconate, ferrous acetate, ferrous nitrate, ferrous tannate, elemental iron, ferric oxide, tritrimanganese tetraoxide, iron phosphate, iron phosphate containing crystal water, ferric sulfate containing crystal water, ferric sulfate containing crystal water, ferric nitrate, ferric chloride, ferric tannate and ferric hydroxide. Preferably, the iron source includes at least one of the divalent iron source such as ferric sulfate containing crystal water, ferric nitrate and ferrous oxalate, because the divalent iron source has a low cost, is conducive to industrial production, and is conducive to preparing the precursor *FeₓMn*_{(1*-x*)}(*OH*)₂ with stable valence.

It may be understood that the complexing agent functions to complex Mn and Fe ions together, so that the Mn and Fe ions are uniformly distributed in the prepared precursor *FeₓMn*_{(1*-x*)}(*OH*)_{2.}

Exemplarily, the complexing agent includes a first metal complexing agent and a second metal complexing agent. The first metal complexing agent includes at least one of sodium citrate and sodium tartrate. The second metal complexing agent includes at least one of ethylenediamine and disodium ethylenediaminetetraacetate. The mass ratio of the first metal complexing agent to the second metal complexing agent is (80~99.9): (0.1~20).

It is to be noted that the first metal complexing agent (sodium citrate and sodium tartrate) is a weak complexing agent for the Mn and Fe ions, while the second metal complexing agent (ethylenediamine or disodium ethylenediaminetetraacetate) is a strong complexing agent for the Mn and Fe ions. A metal ion complexing agent with strong comprehensive performance may be formed by compounding the first metal complexing agent and the second metal complexing agent in the present disclosure. On the one hand, the complexing agent is helpful to completely complex Mn with Fe ions, i.e., such that the Mn and Fe ions are completely precipitated. On the other hand, the complexing agent is helpful to control the reaction rate, so that the complexation rate matches the precipitation rate, and the Mn and Fe ions are precipitated uniformly.

Exemplarily, the mass ratio of the first metal complexing agent to the second metal complexing agent is (80~99.9): (0.1~20), such as 80:20, 85:15, 90:10, 95:5, 99:1, 99.9:0.1, etc. Preferably, the mass ratio of the first metal complexing agent to the second metal complexing agent is (80~95): (5~20). Within this mass ratio range, the complexing agent formed by the compounding of the first metal complexing agent and the second metal complexing agent has strong complexing ability, can completely precipitate Mn and Fe ions in the solution, and the precipitation rates of Mn and Fe ions are matched. As such, in the obtained precursor *FeₓMn*_{(1*-x*)}(*OH*)₂, the Mn and Fe ions are uniformly distributed, which can improve the stability of the precursor *FeₓMn*_{(1-*x*)}(*OH*)₂*.*

Exemplarily, the concentration of the complexing agent in the first reaction system is 0.05 mol/L~1 mol/L, such as 0.05 mol/L, 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1 mol/L, etc.

Exemplarily, the reducing agent includes at least one of sodium thiosulfate and sodium hypophosphite, and the reducing agent in the first reaction system has a concentration of 0.01 mol/L~0.5 mol/L, such as 0.01 mol/L, 0.05 mol/L, 0.1 mol/L, 0.2 mol/L, 0.3 mol/L, 0.4 mol/L, 0.5 mol/L, etc.

It should be noted that the reducing agent added into the first reaction system functions to reduce ferric ion (Fe³⁺) present in the first reaction system to ferrous ion (Fe²⁺), and reduce the trivalent or more manganese ion (Mn³⁺, Mn⁴⁺, etc.) present in the first reaction system to the divalent manganese ion (Mn²⁺). This is because only ferrous ions (Fe²⁺) and divalent manganese ions (Mn²⁺) can react to form the precursor *FeₓMn*_{(1*-x*)}(*O*H*)₂* with stable structure, while the ferric ion (Fe³⁺) reacts with hydroxide radicals to form unstable Fe(OH)₃, and the trivalent or more manganese ion (Mn³⁺, Mn⁴⁺, etc.) reacts with hydroxide radicals to form unstable Mn(OH)₃, Mn(OH)₄, etc., so that the target product (*FeₓMn*_{(1*-x*)}(*OH*)₂) cannot be obtained.

Exemplarily, the first raw material including a manganese source, an iron source, a complexing agent, a reducing agent and an alkaline solution may be mixed in a first protective atmosphere, and the first protective atmosphere includes at least one of nitrogen and an inert gas.

Exemplarily, the inert gas may include at least one of helium (He), neon (Ne), argon (Ar), krypton (Kr), xenon (Xe), etc.

It is to be noted that by mixing the first raw material including a manganese source, an iron source, a complexing agent, a reducing agent and an alkaline solution in the first protective atmosphere, oxidation of divalent Mn and Fe ions by oxygen in the air to produce the ferric ion and trivalent or more manganese ion (Mn³⁺, Mn⁴⁺, etc.) can be avoided, which further leads to degradation of the processability of the lithium manganese iron phosphate material.

Exemplarily, in the precursor *FeₓMn*₍₁₋ₓ₎(*OH*)₂, x may be 0.1, 0.2, 0.3, 0.4, 0.5, 0.6, 0.7, 0.8, 0.9, etc.

Exemplarily, the precursor *FeₓMn*_{(1*-x*)}(*OH*)₂ has the particle size D50 of 1 µm~3 µm, such as 1 µm, 1.2 µm, 1.5 µm, 1.8 µm, 2 µm, 2.2 µm, 2.5 µm, 2.8 µm, 3 µm, etc.

S120. The second raw material including the precursor *FeₓMn*_{(1*-x*)}(*OH*)₂ a lithium source, a phosphorus source, a dopant and a carbon source is mixed to obtain a second reaction system, the pH of the second reaction system is controlled to be 8.0~9.5, spray granulation is performed on the second reaction system to obtain a sintering precursor, and the sintering treatment of the sintering precursor is performed to obtain the lithium manganese iron phosphate material. The lithium manganese iron phosphate material has a structural formula of *LiFeₓMn*_{*y*(1*-x-y*)}*PO*₄, where 0 *< x* < 1, 0 < *y* < 1, 0 ≤ 1 - *x* - *y* ≤ 0.2, and the doping element A is selected from at least one of Be, Ca, Mg, Ba and Sr.

Exemplarily, the second raw material including the precursor *FeₓMn*_{(1*-x*)}(*OH*)_{2,} a lithium source, a phosphorus source, a dopant and a carbon source may be mixed in a sand mill, so that each of the components in the second raw material may be mixed by the sand mill, while the second raw material may be ground by the sand mill to further reduce the particle size of each component in the second raw material.

Exemplarily, the solid content of the second reaction system obtained after grinding and mixing by the sand mill is 25 wt%~50 wt%, such as 25 wt%, 30 wt%, 35 wt%, 40 wt%, 45 wt%, 50 wt%, etc.

Exemplarily, the pH of the second reaction system may be controlled to be 8.0, 8.2, 8.5, 8.8, 9.0, 9.2, 9.5, etc.

Exemplarily, the lithium source includes at least one of lithium carbonate, lithium oxide, lithium hydroxide, lithium chloride, lithium nitrate, lithium nitrite, lithium formate, lithium acetate, lithium oxalate, lithium phosphate, dilithium hydrogen phosphate, lithium dihydrogen phosphate and lithium citrate. The molar ratio of the precursor *FeₓMn*_{(1*-x*)}(*OH*)₂ to the lithium source is 1: (1.0~1.1), such as 1:1.0, 1:1.02, 1:1.05, 1:1.08, 1:1.1, etc.

It is to be noted that by setting the molar ratio of the precursor *FeₓMn*_{(*1-*x)}(*OH*)₂ to the lithium source to 1: (1.0~1.1), i.e., keeping the addition amount of the lithium source at a slightly excessive level, on one hand, lithium deficiency in the prepared lithium manganese iron phosphate material caused by lithium volatilization during sintering is prevented. When the lithium content is too low, the lithium-poor structure will occur, making the Mn ion in the lithium manganese iron phosphate material unable to remain stable at divalent, which is not conducive to later cycle stability. On the other hand, the problem of excessively high lithium content in the lithium manganese iron phosphate material can be avoided. This is because excessively high lithium content in the lithium manganese iron phosphate material will lead to an excessively high pH of the lithium manganese iron phosphate material. When the pH of the lithium manganese iron phosphate material is too high, it will affect its processability, such that the stability of the positive electrode slurry composed of the lithium manganese iron phosphate material, the solvent, the binder, etc. is reduced and further affect the electrical performance of the prepared positive electrode sheet.

Exemplarily, the phosphorus source includes at least one of phosphoric acid, ammonium dihydrogen phosphate, ammonium phosphate, lithium dihydrogen phosphate, manganese phosphate, sodium dihydrogen phosphate, magnesium phosphate, aluminum phosphate, diammonium hydrogen phosphate and phosphorus pentoxide. The molar ratio of the precursor *FeₓMn*_{(1*-x*)}(*OH*)₂ to the phosphorus source is 1: (1.0~1.2), such as 1:1.0, 1:1.05, 1:1.1, 1:1.2, etc.

It may be understood that when the molar ratio of the precursor *FeₓMn*_{(1*-x*)}(*OH*)₂ to the phosphorus source is 1: (1.0~1.2), it means that the addition amount of the phosphorus source is kept at a slightly excessive level, so as to prevent the problem of insufficient phosphate radicals caused by loss of the phosphorus element during the reaction process and sintering process. In addition, when the molar ratio of the precursor *FeₓMn*_{(1*-x*)}(*OH*)₂ to the phosphorus source is greater than 1:1.2, it means that the addition amount of the phosphorus source is too large, which easily leads to an excessively low pH of the final product (lithium manganese iron phosphate material), and causes excessive phosphate radicals to react with the iron ion to generate the impurity such as iron phosphate, thereby resulting in the decrease in the purity of the lithium manganese iron phosphate material.

Exemplarily, the dopant includes at least one of oxalate containing the doping element A, acetate containing the doping element A, chloride containing the doping element A, sulfate containing the doping element A and nitrate containing the doping element A.

Exemplarily, the addition amount of the doping element A in the dopant in the second reaction system is 500 ppm~4000 ppm, such as 500 ppm, 800 ppm, 1000 ppm, 1500 ppm, 2000 ppm, 2500 ppm, 3000 ppm, 3500 ppm, 4000 ppm, etc.

It may be understood that the purpose of introducing the dopant into the second reaction system is to introduce the doping element A into the lithium manganese iron phosphate material. The doping element A is selected from at least one of the divalent metal element such as Be, Ca, Mg, Ba and Sr. Since the valence of the doping element A is consistent with that of the divalent manganese ion and the divalent iron ion, and the valence of the doping element A is stable, it is beneficial to improve the structural stability of the lithium manganese iron phosphate material (*LiFeₓMn_{y}A*_{(1*-x-y*)}*PO₄*). When the lithium manganese iron phosphate material is applied to a lithium-ion battery, it is beneficial to maintain the stability of the lithium ion diffusion channels, thereby improving the cycle performance of the battery.

Exemplarily, the carbon source includes at least one of glucose, sucrose, furan resin, urea-formaldehyde resin, melamine resin, phenolic resin, epoxy resin, polyvinyl alcohol, polystyrene, polymethyl methacrylate, polytetrafluoroethylene, polyvinylidene fluoride, polyacrylonitrile, styrene-butadiene rubber, carboxymethyl cellulose, fructose, lactose, starch, citric acid, carbon black, graphene, carbon nanotube, carbon fiber and activated carbon.

Exemplarily, the molar ratio of the precursor *FeₓMn*_{(*1-x*)}(*OH*)*₂* to the carbon source is 1: (1.5~3.5), such as 1:1.5, 1:2, 1:2.5, 1:3, 1:3.5, etc.

It is to be noted that the carbon source can act as a reducing agent on one hand, i.e., it is possible to reduce the ferric ion (Fe³⁺) present in the second reaction system to the ferrous ion (Fe²⁺), and reduce the trivalent or more manganese ion (Mn³⁺, Mn⁴⁺, etc.) present in the second reaction system to the divalent manganese ion (Mn²⁺). This is because when the contents of the ferric ions (Fe³⁺) and the trivalent or more manganese ion (Mn³⁺, Mn⁴⁺, etc.) in the second reaction system are too high, more structural lithium (lithium carbonate, lithium hydroxide, etc.) will exist in the prepared lithium manganese iron phosphate material, which will thus lead to degradation of the processability of the lithium manganese iron phosphate material, is not conducive to the formation of the positive electrode slurry with high solid content, and further reduces the cycle performance of the battery. On the other hand, the carbon source may form a carbon coating layer after sintering, and the carbon coating layer covers the surface of the primary particle of the lithium manganese iron phosphate material. Since the carbon coating layer has electrical conductivity, the electrical conductivity of the lithium manganese iron phosphate material can be improved, which in turn improves the cycle performance of the lithium-ion battery including the lithium manganese iron phosphate material.

Exemplarily, the second raw materials may further include a pH adjuster, and the molar ratio of the pH adjuster to the phosphorus source is (0.1~1):15, such as 0.1:15, 0.2:15, 0.3:15, 0.4:15, 0.5:15, 0.6:15, 0.7:15, 0.8:15, 0.9:15, 1:15, etc.

It is to be noted that in the embodiment of the present disclosure, the technical means for controlling the pH of the second reaction system to be 8.0~9.5 lies in controlling the addition ratio of the precursor *FeₓMn*_{(1*-x*)}(*OH*)₂ to the phosphorus source (such as phosphoric acid, etc.) on one hand, and adjusting the pH of the second reaction system by adding a pH adjuster into the second reaction system on the other hand.

Exemplarily, the pH adjuster includes at least one of hydrogen peroxide and ammonia water. The concentration of hydrogen peroxide is 20 wt%~40 wt% (such as 20 wt%, 25 wt%, 30 wt%, 35 wt%, 40 wt%, etc.), and the concentration of ammonia is 20 wt%~30 wt% (such as 20 wt%, 22 wt%, 25 wt%, 28 wt%, 30 wt%, etc.). It is to be noted that the mechanism of pH adjustment by hydrogen peroxide is:*2Fe*²⁺ + *H₂O₂ + 2H⁺* → *2Fe³⁺* + 2*H*₂O.

Exemplarily, the sintering treatment of the sintering precursor is performed in a second protective atmosphere, the second protective atmosphere includes a protective gas and an alkyl gas, where the protective gas includes at least one of nitrogen and an inert gas, the alkyl gas includes at least one of methane, propane and butane. The volume percentage of the alkane gas in the second protective atmosphere is 0.1 vol%~3 vol% (such as 0.1 vol%, 0.5 vol%, 1 vol%, 1.5 vol%, 2 vol%, 2.5 vol%, 3 vol%, etc.). Exemplarily, the volume percentage of the protective gas in the second protective atmosphere is 97 vol%~99.9 vol% (such as 97 vol%, 97.5 vol%, 98 vol%, 98.5 vol%, 99 vol%, 99.5 vol%, 99.9 vol%, etc.).

Exemplarily, a spray drying device may be used to perform spray granulation on the second reaction system.

Exemplarily, the sintering treatment of the sintering precursor is performed at a temperature of 650°C~800°C (such as 650°C, 680°C, 700°C, 720°C, 750°C, 780°C, 800°C, etc.).

It may be understood that after performing the sintering treatment of the sintering precursor, the sintered lithium manganese iron phosphate material is in the form of the secondary particle. Therefore, after performing the sintering treatment of the sintering precursor, the lithium manganese iron phosphate material needs to be pulverized to pulverize the secondary particle into the primary particle.

Exemplarily, the primary particle of the lithium manganese iron phosphate material has the particle size D50 of 0.1 µm~0.6 µm, such as 0.1 µm, 0.2 µm, 0.3 µm, 0.4 µm, 0.5 µm, 0.6 µm, etc.

Exemplarily, the lithium manganese iron phosphate material has the carbon element content of 1.0 wt%~2.5 wt% (such as 1.0 wt%, 1.2 wt%, 1.5 wt%, 1.8 wt%, 2.0 wt%, 2.2 wt%, 2.5 wt%, etc.). Carbon is coated on the surface of the primary particle in the form of a carbon coating layer. Since the carbon coating layer has electrical conductivity, the electrical conductivity of the lithium manganese iron phosphate material can be enhanced, thereby improving the cycle performance of the lithium-ion battery including the lithium manganese iron phosphate material.

The moisture content in the lithium manganese iron phosphate material is controlled below 300 ppm. In some embodiments, as measured by a Karl Fischer moisture test method (at a test temperature of190°C), the moisture content in the lithium manganese iron phosphate material prepared by the present disclosure is 50 ppm~300 ppm (such as 50 ppm, 100 ppm, 150 ppm, 200 ppm, 250 ppm, 300 ppm, etc.).

The lithium manganese iron phosphate material prepared by the present disclosure has a surface alkalinity value of 10 µmol/g~150 µmol/g (such as 10 µmol/g, 30 µmol/g, 50 µmol/g, 70 µmol/g, 90 µmol/g, 110 µmol/g, 130 µmol/g, 150 µmol/g, etc.). Exemplarily, the surface alkalinity value of the lithium manganese iron phosphate material may be measured by a heat-flow microcalorimeter. The specific test method is as follows: First, the lithium manganese iron phosphate material is heated to 1023 K under a vacuum of 0.01 Pa and then heat treated for 2 hours to fully decompose Li₂CO₃ and LiOH on the surface of the lithium manganese iron phosphate material to generate Li₂O; then, the adsorption amount of CO₂ is meanused using the dried CO₂ used as an acidic adsorbate at 423 K by the heat-flow microcalorimeter. The adsorption amount of CO₂ is recorded as the surface alkalinity value of the lithium manganese iron phosphate material.

An embodiment of the present disclosure provides a positive electrode sheet, comprising a positive electrode current collector and a positive electrode active material layer disposed on the positive electrode current collector. The positive electrode active material layer comprises the lithium manganese iron phosphate material in any one of the above embodiments or the lithium manganese iron phosphate material prepared by the preparation method of the lithium manganese iron phosphate material in any one of the above embodiments.

Exemplarily, the positive electrode active material layer further includes a binder and a conductive agent, and the mass ratio of the lithium manganese iron phosphate material, the binder and the conductive agent is (90~99): (1~5): (1~5), such as 90:1:1, 90:1:5, 90:5:1, 90:5:5, 94:3:3, 99:1:1, 99:1:5, 99:5:1, 99:5:5, etc.

Exemplarily, the binder includes at least one of polyvinylidene fluoride, polymethyl methacrylate and styrene-butadiene rubber.

Exemplarily, the conductive agent includes at least one of activated carbon, conductive carbon black, carbon nanotube and graphene.

Exemplarily, the positive electrode current collector may be aluminum foil, carbon-coated aluminum foil or graphene aluminum foil.

Exemplarily, the positive electrode active material layer may have the compaction density of 2.1 g/cm¹∼2.6 g/cm³, such as 2.1 g/cm³, 2.2 g/cm³, 2.3 g/cm³, 2.4 g/cm³, 2.5 g/cm³, 2.6 g/cm³, etc.

An embodiment of the present disclosure provides a preparation method of a positive electrode sheet for preparing the positive electrode sheet in any one of the above embodiments. The preparation method of the positive electrode sheet comprises:

S210: providing a solid raw material and a solvent, and uniformly mixing the solid raw materials and the solvent to obtain a positive electrode slurry, where the solid raw material includes the lithium manganese iron phosphate material, the binder and the conductive agent, and the lithium manganese iron phosphate material is the lithium manganese iron phosphate material in any one of the above embodiments or the lithium manganese iron phosphate material prepared by the preparation method of the lithium manganese iron phosphate material in any one of the above embodiments.

Exemplarily, in the solid raw material, the mass ratio of the lithium manganese iron phosphate material, the binder and the conductive agent is (90~99): (1~5): (1~5), such as 90:1:1, 90:1:5, 90:5:1, 90:5:5, 94:3:3, 99:1:1, 99:1:5, 99:5:1, 99:5:5, etc.

Exemplarily, the mass percentage of the solid raw material in the positive electrode slurry is 60 wt%~70 wt%, such as 60 wt%, 62 wt%, 65 wt%, 67 wt%, 70 wt%, etc.

Exemplarily, the binder includes at least one of polyvinylidene fluoride (PVDF), polymethyl methacrylate and styrene-butadiene rubber.

Exemplarily, the conductive agent includes at least one of activated carbon, conductive carbon black, carbon nanotubes and graphene.

Exemplarily, the positive electrode current collector may be aluminum foil, carbon-coated aluminum foil or graphene aluminum foil.

Exemplarily, the solvent may include at least one of N-methylpyrrolidone (NMP), N,N-dimethylformamide (DMF) and N,N-dimethylacetamide (DMA).

**S220:** Providing a positive electrode current collector, applying the positive electrode slurry onto the positive electrode current collector, and performing a drying treatment of the positive electrode slurry to form a positive electrode active material layer, so as to obtain the positive electrode sheet.

Exemplarily, the positive electrode slurry may be applied to the surfaces at two sides of the positive electrode current collector by coating.

Exemplarily, the positive electrode slurry may be dried by baking at a baking temperature of 100°C~120°C (such as 100°C, 105°C, 110°C, 115°C, 120°C, etc.) for a baking time duration of 1 s~30 s (such as 1 s, 5 s, 10 s, 15 s, 20 s, 30 s, etc.).

Exemplarily, after performing drying treatment of the positive electrode slurry, the surface density of the positive electrode active material layer on the surface of the positive electrode current collector is measured to be 160 g/m²~250 g/m², such as 160 g/m², 180 g/m², 200 g/m², 230 g/m², 250 g/m², etc.

Exemplarily, after performing drying treatment of the positive electrode slurry, the positive electrode slurry may also be rolled. After rolling, the compaction density of the positive electrode active material layer on the surface of the positive electrode current collector is measured to be 2.1 g/cm³~2.6 g/cm³, such as 2.1 g/cm³, 2.2 g/cm³, 2.3 g/cm³, 2.4 g/cm³, 2.5 g/cm³, 2.6 g/cm³, etc.

The present disclosure further provides a battery, comprising a positive electrode sheet, a negative electrode sheet, a separator and an electrolyte. The positive electrode sheet is the positive electrode sheet in any one of the above embodiments or the positive electrode sheet prepared by the preparation method of the positive electrode sheet in any one of the above embodiments.

Hereinafter, the lithium manganese iron phosphate material, the preparation method thereof, the positive electrode sheet, the preparation method thereof and the battery provided by the present disclosure will be described in detail with reference to specific Examples.

### Example 1

A preparation method for the lithium manganese iron phosphate material, including:
Under protection of a nitrogen atmosphere, the manganese source, the iron source, the complexing agent, the reducing agent, and the alkaline solution were mixed to obtain a first reaction system. The pH of the first reaction system was controlled at 9.0~11.0. After each of the components in the first reaction system was reacted, the precursor Fe_{0.37}Mn_{0.63}(OH)₂ was obtained The manganese source was manganese sulfate, the iron source was ferrous sulfate, the complexing agent includes sodium citrate (90 wt%) and ethylenediamine (10 wt%), the reducing agent was sodium thiosulfate, and the pH of the first reaction system was 9.0.

The precursor Fe_{0.35}Mn_{0.65}(OH)₂, the lithium source, the phosphorus source, the dopant, the carbon source, and the pH adjuster were added to a sand mill for grinding and mixing to obtain the second reaction system. The molar ratio of the precursor Fe_{0.35}Mn_{0.65}(OH)₂ to the phosphorus source was 1: 1.05. The pH of the second reaction system was 9.0. The second reaction system was subjected to spray granulation, obtaining the sintering precursor. The sintering precursor was then subjected to the sintering treatment so as to obtain the lithium manganese iron phosphate material. The structural formula of the lithium manganese iron phosphate material is LiMn_{0.6}Fe_{0.35}Be_{0.05}PO₄, and the surface alkalinity of the obtained lithium manganese iron phosphate material is 80 µmol/g. The lithium source is lithium carbonate, the phosphorus source is phosphoric acid, the dopant is beryllium oxalate (BeC₂O₄), the carbon source is glucose, and the pH adjuster is ammonia.

### Example 2

A preparation method for the lithium manganese iron phosphate material differs from Example 1 in that: the dopant is different, the pH value of the second reaction system is different, and the structural formula of the obtained lithium manganese iron phosphate material is different.

In Example 2, the added dopant was magnesium oxalate (MgC₂O₄). After the precursor Fe_{0.37}Mn_{0.63}(OH)₂, the lithium source, the phosphorus source, the dopant, the carbon source, and the pH adjuster were added to a sand mill for milling and mixing, obtaining the second reaction system which has the pH value of 9.0. The surface alkalinity of the obtained lithium manganese iron phosphate material was 90 µmol/g. The structural formula of the obtained lithium manganese iron phosphate material was LiMn_{0.6}Fe_{0.35}Mg_{0.05}PO₄.

### Example 3

A preparation method for the lithium manganese iron phosphate material differs from Example 1 in that the precursor obtained after the reaction of the first reaction system has a different structural formula, resulting in a different structural formula of the obtained lithium manganese iron phosphate material.

In this Example 3, the precursor has the structural formula Fe_{0.39}Mn_{0.61}(OH)₂, and the obtained lithium manganese iron phosphate material has the structural formula of LiMn_{0.6}Fe_{0.38}Be_{0.02}PO₄.

### Example 4

A preparation method for the lithium manganese iron phosphate material differs from Example 1 in that: the dopant is different and the pH value of the second reaction system is different, resulting in the different structural formula of the obtained lithium manganese iron phosphate material.

In Example 4, the added dopant was barium oxalate (BaC₂O₄). The precursor Fe_{0.37}Mn_{0.63}(OH)₂, the lithium source, the phosphorus source, the dopant, the carbon source, and the pH adjuster were added to a sand mill for milling and mixing, obtaining the second reaction system which has the pH value of 8.0. The surface alkalinity of the obtained lithium manganese iron phosphate material was 10 µmol/g. The structural formula of the obtained lithium manganese iron phosphate material was LiMn_{0.6}Fe_{0.35}Ba_{0.05}PO₄.

### Example 5

A preparation method for the lithium manganese iron phosphate material differs from Example 1 in that the molar ratio of the precursor Fe_{0.35}Mn_{0.65}(OH)₂ to the phosphorus source are different, and the pH value of the second reaction system is different.

In this Example 5, the molar ratio of the precursor Fe_{0.35}Mn_{0.65}(OH)₂ to the phosphorus source is 1:1.0. The pH value of the second reaction system was 9.5, and the surface alkalinity of the obtained lithium manganese iron phosphate material was 110 µmol/g.

### Example 6

A preparation method for the lithium manganese iron phosphate material differs from Example 1 in that the molar ratio of the precursor Fe_{0.35}Mn_{0.65}(OH)₂ to the phosphorus source are different, and the pH value of the second reaction system is different.

In this Example 6, the molar ratio of the precursor Fe_{0.35}Mn_{0.65}(OH)₂ to the phosphorus source is 1:1.2, the pH value of the second reaction system is 8.5, and the surface alkalinity of the obtained lithium manganese iron phosphate material is 30 µmol/g.

### Example 7

A preparation method for the lithium-ion battery, including:
1. Preparation of the positive electrode slurry: the LiMn_{0.6}Fe_{0.35}Be_{0.05}PO₄ material prepared in Example 1 is mixed with the binder polyvinylidene fluoride (PVDF) and the conductive agent (conductive carbon black) at a ratio of 94:3:3. The solvent N-methylpyrrolidone (NMP) is added to control the viscosity of the positive electrode slurry to 20000 mPa·s. The solid content of the positive electrode slurry is 65 wt%;
2. Preparation of the positive electrode slurry: The above positive electrode slurry is coated on both surfaces of the current collector aluminum foil with a coating area density of 200 g/m², and then rolled to achieve a compaction density of 2.35 g/m³;
3. Preparation of a negative electrode sheet: The negative electrode material graphite, the conductive agent acetylene black, the binder sodium carboxymethyl cellulose (CMC) and styrene-butadiene rubber (SBR) are mixed in a mass percentage ratio of 94:1:2:3, and then deionized water is added as solvent and stirred evenly to obtain the negative electrode slurry. The above negative electrode slurry is uniformly coated on both surfaces of the negative electrode current collector copper foil, and then dried, rolled, and sliced to obtain the negative electrode sheet with an area density of 90 g/ cm³ and a compaction density of 1.6 g/cm³.
4. Formulation of the electrolyte: ethylene carbonate (EC), ethyl methyl carbonate (EMC), and diethyl carbonate (DEC) are mixed in a volume ratio of 1:1:1 to obtain an organic solvent. Then, the thoroughly dried lithium salt LiPF₆ is dissolved in the organic solvent to formulate into the electrolyte with a concentration of 1 mol/L.
5. Assembly of the battery: The positive electrode, a separator, and a negative electrode are stacked in sequence, then the tabs are welded, baked, and after the moisture content is qualified, an appropriate amount of the electrolyte is injected, sealed, then aged, formed, and then sealed by suction to obtain the lithium-ion battery.

### Example 8

A preparation method for a lithium-ion battery differs from Example 7 in that: when preparing the positive electrode slurry, the used lithium manganese iron phosphate material is the lithium manganese iron phosphate material obtained in Example 2, and the solid content of the positive electrode slurry is 68wt%.

### Example 9

A preparation method for a lithium-ion battery differs from Example 7 in that: when preparing the positive electrode slurry, the used lithium manganese iron phosphate material is the lithium manganese iron phosphate material obtained in Example 3, and the solid content of the positive electrode slurry is 65wt%.

### Example 10

A preparation method for a lithium-ion battery differs from Example 7 in that: when preparing the positive electrode slurry, the used lithium manganese iron phosphate material is the lithium manganese iron phosphate material obtained in Example 4, and the solid content of the positive electrode slurry is 67wt%.

### Example 11

A preparation method for a lithium-ion battery differs from Example 7 in that: when preparing the positive electrode slurry, the used lithium manganese iron phosphate material is the lithium manganese iron phosphate material obtained in Example 5, and the solid content of the positive electrode slurry is 63wt%.

### Example 12

A preparation method for a lithium-ion battery differs from Example 9 in that: when preparing the positive electrode slurry, the used lithium manganese iron phosphate material is the lithium manganese iron phosphate material obtained in Example 6, and the solid content of the positive electrode slurry is 70 wt%.

### Comparative Example 1

A preparation method for the lithium manganese iron phosphate material, which differs from Example 1 that the pH value of the second reaction system is different. In Comparative Example 1, the pH value of the second reaction system is 7.5, that is, the surface alkalinity value of the lithium manganese iron phosphate material is 8 µmol/g.

### Comparative Example 2

A preparation method for the lithium manganese iron phosphate material, which differs from Example 1 in that the pH value of the second reaction system is different. In Comparative Example 1, the pH value of the second reaction system is 10, that is, the surface alkalinity value of the lithium manganese iron phosphate material is 180 µmol/g.

### Comparative Example 3

A preparation method for the lithium manganese iron phosphate material, which differs from Example 1 in that no dopant is added when preparing the second reaction system, resulting in a different structural formula of the obtained lithium manganese iron phosphate material. In Comparative Example 3, the structural formula of the obtained lithium manganese iron phosphate material is LiMn_{0.65} Fe_{0.35}PO₄.

### Comparative Example 4

A preparation method for the lithium-ion battery, which differs from Example 9 in that the lithium manganese iron phosphate material used in preparing the positive electrode slurry is different, and the solid content of the positive electrode slurry is different.

In Comparative Example 4, the used lithium manganese iron phosphate material is the same lithium manganese iron phosphate material prepared in Comparative Example 1, and the solid content of the positive electrode slurry was 50 wt%.

### Comparative Example 5

A preparation method for the lithium-ion battery, which differs from Example 9 in that the lithium manganese iron phosphate material used in preparing the positive electrode slurry is different, and the solid content of the positive electrode slurry is different.

In Comparative Example 5, the used lithium manganese iron phosphate material is the same lithium manganese iron phosphate material prepared in Comparative Example 2, and the solid content of the positive electrode slurry was 45 wt%.

### Comparative Example 6

A preparation method for the lithium-ion battery which differs from Example 9 in that the lithium manganese iron phosphate material used in preparing the positive electrode slurry is the lithium manganese iron phosphate material (LiMn_{0.65}Fe_{0.35}PO₄) prepared in Comparative Example 3.

By comparing Examples 7-12 with Comparative Examples 4-5, it can be seen that in the preparation method for the lithium-ion battery described in Examples 7-12, the solid content of the positive electrode slurry may reach 70 wt%, while in the preparation method for the lithium-ion battery described in Comparative Example 4, the solid content of the positive electrode slurry may only reach 50 wt%, and in the preparation method for the lithium-ion battery described in Comparative Example 5, the solid content of the positive electrode slurry may only reach 45 wt%. It is known that the surface alkalinity value of the lithium manganese iron phosphate material used in Examples 7-12 is 10 µmol/g~150 µmol/g, while the surface alkalinity value of the lithium manganese iron phosphate material used in Comparative Example 4 is 8 µmol/g and the surface alkalinity value of the lithium manganese iron phosphate material used in Comparative Example 5 is 180 µmol/g. This indicates that when the surface alkalinity value of the lithium manganese iron phosphate material is 10 µmol/g~150 µmol/g, the lithium manganese iron phosphate material has better processing performance, better dispersion effect between the lithium manganese iron phosphate material, the binder and the solvent, which helps to reduce the addition amount of solvent, thereby increasing the solid content of the positive electrode slurry.

The lithium-ion batteries prepared in Examples 7-12 and Comparative Examples 4-6 are subjected to an electrical performance test. The test method includes: placing the lithium-ion batteries in a constant temperature chamber at 45°C, charging to 4.2V at 1C constant current and constant voltage, cutting off at 0.02C, and then discharging at 1C for a cycle. The cycle capacity and the average voltage are recorded, the number of cycle at 80% capacity retention is obtained, and the voltage drop is recorded. The test results are shown in the table below.

**[Table 1_sm_0001]**

| | Number of cycle | Voltage drop |
|---|---|---|
| Example 7 | 4000cls | 60mV |
| Example 8 | 3870cls | 80mV |
| Example 9 | 3800cls | 90mV |
| Example 10 | 3920cls | 85mV |
| Example 11 | 3680 cls | 95 mV |
| Example 12 | 3750 cls | 85 mV |
| Comparative Example 4 | 2250cls | 180mV |
| Comparative Example 5 | 2570cls | 150mV |
| Comparative Example 6 | 3160cls | 120mV |

As can be seen from the table above:
By comparing Examples 7-12 with Comparative Examples 4-5, it can be seen that when cycling to 80% capacity retention, the lithium-ion batteries prepared in Examples 7-12 all have a greater numbers of cycle than those of the lithium-ion batteries prepared in Comparative Examples 4-5, and the voltage drops of the lithium-ion batteries prepared in Examples 7-12 are less than those of the lithium-ion batteries prepared in Comparative Examples 4-5. This indicates that the lithium-ion batteries prepared in Examples 7-12 of the present disclosure have better cycle performance. It is known that the difference between the batteries in Examples 7-12 and Comparative Examples 4-5 is that the surface alkalinity of the lithium manganese iron phosphate material used in Examples 7-12 ranges from 10 µmol/g ~150 µmol/g, while the surface alkalinity of the lithium manganese iron phosphate material used in Comparative Example 4 is 8 µmol/g and the surface alkalinity of the lithium manganese iron phosphate material used in Comparative Example 5 is 180 µmol/g. This indicates that when the surface alkalinity of the lithium manganese iron phosphate material is 10 µmol/g~150 µmol/g, the positive electrode sheet prepared using such lithium manganese iron phosphate material has better electrical performance, thereby improving the cycle performance of the lithium-ion battery containing such positive electrode.

By comparing Examples 7-12 with Comparative Example 6, it can be seen that, when cycling to 80% capacity retention, the lithium-ion batteries prepared in Examples 7-12 all have the greater numbers of cycle than that of the lithium-ion battery prepared in Comparative Example 6, and the voltage drops of the lithium-ion batteries prepared in Examples 7-12 each are smaller than that of the lithium-ion battery prepared in Comparative Example 6. This indicates that the lithium-ion batteries prepared in Examples 7-12 of the present disclosure have better cycle performance. This is because the lithium iron phosphate material used when preparing the lithium-ion battery in Comparative Example 6 is the undoped lithium iron phosphate material (LiMn_{0.65}Fe_{0.35}PO₄), while the lithium iron phosphate materials used when preparing the lithium-ion battery in _{E}xamples 7-12 of the present disclosure all are the doped lithium iron phosphate material (LiMn_{0.6}Fe_{0.35}Be_{0.05}PO ₄, LiMn_{0.6}Fe_{0.35}Mg_{0.05}PO₄, LiM_{0.6}Fe_{0.38}Be_{0.02}PO₄, LiMn_{0.6}Fe_{0.35}Ba _{0.05}PO₄). It can be understood that the doping element A (Be, Mg, Ba) is added to the lithium manganese iron phosphate material in Examples 7-12 of the present disclosure, since the valence state of doping element A is consistent with that of the divalent manganese ion and the divalent iron ion, and the valence state of doping element A is stable, it is beneficial to improve the structural stability of the lithium manganese iron phosphate material. When this lithium manganese iron phosphate material is applied in the lithium-ion battery, it is beneficial to maintain the stability of lithium ion diffusion channels, thereby improving the cycle performance of the battery.

## Claims

1. A lithium manganese iron phosphate material, wherein the lithium manganese iron phosphate material has a structural formula of LiFeₓMn_{y}A_{(1-x-y)}PO₄ , wherein 0 < x < 1 , 0 < y < 1, 0 ≤ 1-x-y ≤ 0.2 , and a doping element A is selected from at least one of Be, Ca, Mg, Ba and Sr; the lithium manganese iron phosphate material has a surface basicity value of 10 µmol/g~150 µmol/g.

2. The lithium manganese iron phosphate material according to claim 1, wherein the lithium manganese iron phosphate material has a particle size D50 of 0.1 µm~0.6 µm; and/or
the lithium manganese iron phosphate material has a carbon element content of 1.0 wt%~2.5 wt%; and/or
the lithium manganese iron phosphate material has a moisture content of 50 ppm~300 ppm.

3. A preparation method for a lithium manganese iron phosphate material, comprising:
mixing a first raw material comprising a manganese source, an iron source, a complexing agent, a reducing agent and an alkaline solution to obtain a first reaction system, controlling a pH value of the first reaction system to be 9.0~11.0, and reacting each of components in the first reaction system to obtain a precursor FeₓMn₍₁₋ₓ₎(OH)₂, wherein 0 < x < 1;
mixing a second raw material comprising the precursor FeₓMn₍₁₋ₓ₎(OH)₂, a lithium source, a phosphorus source, a dopant, and a carbon source to obtain a second reaction system, controlling a pH value of the second reaction system to be 8.0~9.5, performing spray-granulation of the second reaction system to obtain a sintering precursor, and performing a sintering treatment of the sintering precursor to obtain the lithium iron manganese phosphate having a structural formula of LiFeₓMn_{y}A_{(1-x-y)} PO₄, wherein 0 < x < 1, 0< y < 1 , 0 ≤ 1- x-y ≤ 0.2, and a dopant element A is selected from at least one of Be, Ca, Mg, Ba, and Sr.

4. The preparation method for the lithium manganese iron phosphate material according to claim 3, wherein the manganese source comprises at least one of manganese sulfate, manganese phosphate, manganese oxalate, dimanganese trioxide, trimanganese tetraoxide, manganese acetate, manganese carbonate, manganese hydroxide, manganese chloride, manganese sulfate comprising crystal water, methylcyclopentadiene tricarbonyl manganese, manganese pyrophosphate, manganese trichloride, manganese metasilicate, decacarbonyldimanganese, manganese titanate, manganese carbide, manganese nitrate, manganese monoxide, dimanganese heptaoxide, and manganese dioxide; and/or
the iron source comprises at least one of ferrous sulfate, ferrous sulfate comprising crystal water, ferrous oxide, ferrous chloride, ferrous iodide, ferrous bromide, ferrous sulfide, ferrous hydroxide, ferrous oxalate, ferrous lactate, ferrous gluconate, ferrous acetate, ferrous nitrate, ferrous tannate, elemental iron, ferric oxide, ferroferric oxide, ferric phosphate, ferric phosphate containing crystal water, ferric sulfate, ferric sulfate containing crystal water, ferric nitrate, ferric chloride, ferric tannate, and ferric hydroxide ; and/or
the complexing agent comprises a first metal complexing agent and a second metal complexing agent, the first metal complexing agent comprises at least one of sodium citrate and sodium tartrate, and the second metal complexing agent comprises at least one of ethylenediamine and disodium ethylenediaminetetraacetate, a mass ratio of the first metal complexing agent to the second metal complexing agent is (80~99.9) :(0.1~20), the complexing agent in the first reaction system has a concentration of 0.05 mol/L~1 mol/L; and/or
the reducing agent comprises at least one of sodium thiosulfate and sodium hypophosphite, and the reducing agent in the first reaction system has a concentration of 0.01 mol/L~ 0.5 mol/L; and/or
the alkaline solution comprises water and an alkaline substance, wherein the alkaline substance comprises at least one of sodium hydroxide and potassium hydroxide, and the alkaline substance in the alkaline solution has a concentration of 0.1 mol/L~4 mol/L.

5. The preparation method for the lithium manganese iron phosphate material according to claim 3, wherein the lithium source comprises at least one of lithium carbonate, lithium oxide, lithium hydroxide, lithium chloride, lithium nitrate, lithium nitrite, lithium formate, lithium acetate, lithium oxalate, lithium phosphate, dilithium hydrogen phosphate, lithium dihydrogen phosphate, and lithium citrate, and a molar ratio between the precursor FeₓMn₍₁₋ₓ₎(OH)₂ and the lithium source is 1:(1.0~1.1); and/or
the phosphorus source comprises at least one of phosphoric acid, ammonium dihydrogen phosphate, ammonium phosphate, lithium dihydrogen phosphate, manganese phosphate, sodium dihydrogen phosphate, magnesium phosphate, aluminum phosphate, diammonium hydrogen phosphate, and phosphorus pentoxide; a molar ratio between the precursor FeₓMn₍₁₋ₓ₎(OH)₂ and the phosphorus source is 1:(1.0~1.2); and/or
the dopant comprises at least one of oxalate comprising the dopant element A, acetate comprising the dopant element A, chloride comprising the dopant element A, sulfate comprising the dopant element A, and nitrate comprising the dopant element A; wherein an addition amount of the dopant element A in the dopant in the second reaction system is 500 ppm~4000 ppm; and/or
the carbon source comprises s at least one of glucose, sucrose, furan resin, urea-formaldehyde resin, pyrimidine resin, phenolic resin, epoxy resin, polyvinyl alcohol, polystyrene, polymethyl methacrylate, polytetrafluoroethylene, polyvinylidene fluoride, polyacrylonitrile, styrene-butadiene rubber, carboxymethyl cellulose, fructose, lactose, starch, citric acid, carbon black, graphene, carbon nanotube, carbon fiber, and activated carbon, and a molar ratio between the precursor FeₓMn₍₁₋ₓ₎(OH)₂ and the carbon source is 1:(1.5~3.5).

6. The preparation method for the lithium manganese iron phosphate material according to claim 3, wherein the second raw material further comprises a pH adjuster, and a molar ratio of the pH adjuster to the phosphorus source is (0.1~1):15;
the pH adjuster comprises at least one of hydrogen peroxide and ammonia, wherein the hydrogen peroxide has a concentration of 20wt%~40wt% and the ammonia has a concentration of 20wt%~30wt%.

7. The preparation method for the lithium manganese iron phosphate material according to claim 3, wherein the first raw material comprising the manganese source, the iron source, the complexing agent, the reducing agent, and the alkaline solution is mixed in a first protective atmosphere, wherein the first protective atmosphere comprises at least one of nitrogen and an inert gas; and/or
the sintering precursor is subjected to a sintering treatment in a second protective atmosphere, and the second protection atmosphere comprises a protective gas and an alkyl gas, wherein the alkyl gas has a volume percentage of 0.1 vol%~3 vol%.

8. The preparation method for the lithium manganese iron phosphate material according to claim 7, wherein the alkyl gas comprises at least one of methane, propane, and butane; and/ or
the sintering precursor is subjected to the sintering treatment at a temperature condition of 650°C~800°C for a sintering time of 24~36 hours.

9. The preparation method for the lithium manganese iron phosphate material according to claim 3, wherein the precursor FexMn₍₁₋ₓ₎(OH)₂ has a particle size D50 of 1µm~3µm; and/ or
a primary particle of the lithium manganese iron phosphate material has a particle size D50 of 0.1 µm ~0.6 µm.

10. A positive electrode sheet, comprising a positive current collector and a positive active material layer disposed on the positive current collector, wherein the positive active material layer comprises the lithium manganese iron phosphate material according to claims 1-2 or the lithium manganese iron phosphate material prepared by the preparation method for the lithium manganese iron phosphate material according to any one of claims 3-9.

11. The positive electrode sheet according to claim 10, wherein the positive electrode active material layer further comprises a binder and a conductive agent, a mass ratio of the lithium manganese iron phosphate material, the binder and the conductive agent is (90~99):(1~5):(1~5), the binder comprises at least one of polyvinylidene fluoride , polymethyl methacrylate and styrene-butadiene rubber, and the conductive agent comprises at least one of activated carbon, conductive carbon black, carbon nanotube and graphene.

12. A preparation method for a positive electrode sheet, comprising:
providing a solid raw material and a solvent, and mixing uniformly the solid raw material and the solvent to obtain a positive electrode slurry, wherein the solid raw material comprises a lithium manganese iron phosphate material, a binder and a conductive agent, wherein the lithium manganese iron phosphate material is the lithium manganese iron phosphate material according to any one of claims 1-2 or the lithium manganese iron phosphate material prepared according to the preparation method for the lithium manganese iron phosphate material recited in any one of claims 3-9;
providing a positive electrode current collector, applying the positive electrode slurry on the positive electrode current collector, and performing a dry treatment of the positive electrode slurry to form a positive electrode active material layer, thereby obtaining the positive electrode sheet.

13. The preparation method for the positive electrode sheet according to claim 12, wherein a mass ratio of the lithium manganese iron phosphate material, the binder and the conductive agent in the solid raw material is (90~99) :(1~5) :(1~5); and a mass percentage of the solid raw material in the positive electrode slurry is 60wt%~70wt%;
a rolling of the positive electrode slurry is performed after the dry treatment of the positive electrode slurry, the positive electrode active material layer has an area density of160 g/m² ~250 g/m², and the positive electrode active material layer has a compaction density of 2.1 g/m³ ~ 2.6 g/m³.

14. A battery, comprising a positive electrode sheet, a negative electrode sheet, a separator and an electrolyte, wherein the positive electrode sheet is the positive electrode sheet according to any one of claims 10-11 or the positive electrode sheet prepared by the preparation method for the positive electrode sheet according to any one of claims 12-13.
